# FASCICULE DE BREVET EUROPEEN

(11) **EP 1 335 565 B1**
(45) Date de publication et mention de la délivrance du brevet: **15.11.2006**
(21) Numéro de dépôt: 03290242.1
(22) Date de dépôt: 31.01.2003
(51) Int. Cl.: H04L 29/06

(54) **Procédé et dispositif pour le traitement de paquets de données**
Verfahren und Vorrichtung zur Verarbeitung von Datenpaketen
Method and device for the processing of data packets

(30) Priorité: 12.02.2002 FR 0201705
(43) Date de publication de la demande: 13.08.2003
(73) Titulaire: FRANCE TELECOM, 75015 Paris (FR)
(72) Inventeur: Paul, Olivier, 64370 Arthez de Bearn (FR); Gombault, Sylvain, 35000 Rennes (FR); Laurent Maknavicius, Maryline, 91080 Courcouronnes (FR); Lattmann, Joel, 77420 Champs Sur Marne (FR); Duret, Christian, 92320 Chatillon (FR); Guesdon, Hervé, 38000 Grenoble (FR)
(74) Mandataire: Loisel, Bertrand

(56) Documents cités:
- EP-A- 1 030 493
- EP-A- 1 128 608
- CHEUNG G ET AL: "Optimal routing table design for IP address lookups under memory constraints" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21 mars 1999 (1999-03-21), pages 1437-1444, XP010323888 ISBN: 0-7803-5417-6
- TONG-BI PEI ET AL: "PUTTING ROUTING TABLES IN SILICON" IEEE NETWORK, IEEE INC. NEW YORK, US, vol. 6, no. 1, 1992, pages 42-50, XP000262202 ISSN: 0890-8044

## Description

La présente invention concerne un procédé de traitement de paquets de données selon des règles appliquées à chaque paquet de données, en fonction de données contenues dans ce paquet.

Elle concerne plus particulièrement un procédé de configuration d'un dispositif de mémoire particulier utilisé pour le traitement de paquets de données.

La demande de brevet FR-A-2 812 491 publiée le 1 février 2002, divulgue un dispositif de contrôle d'accès pour réseaux ATM. Ce dispositif comprend un contrôleur d'accès qui configure des analyseurs de trafic pour traiter une à une les cellules porteuses du trafic ATM. Les analyseurs de trafic procèdent par analyse du contenu des cellules porteuses de trafic ATM en leur associant des références d'acheminement au moyen d'une mémoire associative de type Trie. De tels dispositifs peuvent aussi être utilisés dans des routeurs IP, des dispositifs de sécurité («Firewall»), des dispositifs de mesure de trafic, etc. Selon ces applications, le traitement affecté à chaque paquet de données peut être un adressage de ce paquet, une modification de données de ce paquet, l'enregistrement d'une information établie à partir de ce paquet, ou, de façon générale, une action déterminée à partir du contenu de ce paquet

L'intérêt de l'utilisation d'une mémoire de type Trie est de permettre une analyse rapide et dans un ordre quelconque de parties des contenus des cellules porteuses de trafic. Une telle mémoire et son utilisation dans l'analyse de paquets de données sont décrites dans la demande de brevet EP-A-1 030 493 publiée le 23 août 2000.

La configuration de la mémoire Trie est mise en oeuvre au niveau du gestionnaire de contrôle d'accès.

Un objectif de la présente invention est d'obtenir une configuration de cette mémoire qui permette d'affecter un traitement approprié à chaque paquet de données en fonction de parties de son contenu.

L'invention propose un procédé de configuration d'une mémoire associative de type Trie pour le traitement de paquets de données en fonction d'un ensemble de règles. La mémoire Trie est utilisée pour l'analyse de chaînes binaires situées à des emplacements déterminés de chaque paquet de données. Chaque règle attribue une action à un paquet en fonction des valeurs desdites chaînes binaires. La mémoire Trie comporte des registres composés d'un nombre déterminé de cellules élémentaires pour recevoir des références respectives.

Selon l'invention, le procédé, défini dans la revendication 1, comprend une étape au cours de laquelle on traduit l'ensemble de règles en un arbre d'analyse des paquets, comportant des noeuds répartis en étages successifs respectivement associés aux emplacements considérés dans un ordre déterminé, des arcs, et des feuilles correspondant à des actions attribuables par les règles. Chaque arc a un noeud de départ et un point d'arrivée consistant soit en un noeud de l'étage suivant celui du noeud de départ soit en une feuille. Le premier étage comprend un unique noeud racine. Chaque arc de l'arbre est associé à un domaine de valeurs de chaîne binaire pouvant apparaître à l'emplacement associé à l'étage de son noeud de départ. L'arbre d'analyse définit ainsi des chemins consistant chacun en une suite de n arcs, n étant un entier au moins égal à 1, tels que le point d'arrivée de chaque arc d'un chemin autre que le dernier arc soit le noeud de départ de l'arc suivant dudit chemin, et que le point d'arrivée du dernier arc du chemin soit une feuille correspondant à une action attribuée d'après l'ensemble des règles à chaque paquet ayant, aux n emplacements respectivement associés aux étages des noeuds de départ des n arcs du chemin, des valeurs de chaîne binaire tombant dans les n domaines respectivement associés auxdits arcs.

Le procédé comprend en outre une étape au cours de laquelle on alloue un groupe de registres de la mémoire Trie incluant un registre portier à chaque noeud de l'arbre d'analyse appartenant à un étage associé à un emplacement, et on enregistre dans les cellules de ce groupe de registres des références telles qu'en analysant à partir du registre portier la valeur de chaîne binaire contenue audit emplacement dans un paquet, on obtienne une référence finale dépendant de quel domaine contient ladite valeur parmi les domaines de valeurs associés aux arcs ayant ledit noeud comme noeud de départ et telle que :
- si l'arc associé au domaine contenant ladite valeur a pour point d'arrivée une feuille correspondant à une action, la référence finale désigne ladite action comme étant attribuée au paquet, et
- si l'arc associé au domaine contenant ladite valeur a un autre noeud de l'étage suivant pour point d'arrivée, la référence finale désigne ledit autre noeud pour poursuivre en analysant la valeur de chaîne binaire contenue dans le paquet à l'emplacement associé audit étage suivant.

Un tel mode de configuration de la mémoire Trie offre une grande flexibilité pour prendre en compte une grande diversité de règles de classement du trafic, qui peuvent correspondre à diverses actions à entreprendre sur les paquets de données en fonction du contenu des emplacements analysés. Les chemins de l'arbre correspondent à des graphes d'analyse qui sont parcourus au moyen d'opérations d'indexation et d'indirection dans la mémoire Trie ainsi configurée.

Une telle organisation de la structure d'analyse permet de garantir que la durée d'analyse d'un paquet de données quelconque est limitée par une borne supérieure fixée par l'analyse considérée. Cette borne correspond à la hauteur de l'arbre d'analyse, c'est-à-dire au nombre de champs à analyser. Ceci permet à l'opérateur d'un réseau de communication utilisant l'invention de réaliser un traitement en temps réel des paquets de données qui se présentent à l'entrée de l'analyseur de trafic, en allouant des moyens d'analyse suffisants.

Selon l'invention, l'ordre considéré à l'étape de construction de l'arbre d'analyse résulte avantageusement d'un tri des emplacements opéré après dénombrement d'intervalles élémentaires. Pour chacun des emplacements, on définit des intervalles élémentaires consécutifs couvrant des valeurs de chaîne binaire pouvant apparaître à cet emplacement, chaque intervalle élémentaire étant tel que l'action attribuée par chacune des règles ne soit pas modifiée par un changement, à l'intérieur dudit intervalle élémentaire, de la valeur de la chaîne binaire située audit emplacement dans un paquet traité. Le tri des emplacements est alors opéré dans un ordre tel que l'emplacement pour lequel le plus grand nombre d'intervalles élémentaires a été défini soit placé en dernier. On peut notamment trier les emplacements dans l'ordre des nombres croissants d'intervalles élémentaires.

Un avantage de tels tris d'emplacements réside dans la minimisation de la taille de la mémoire Trie nécessaire pour l'analyse du contenu de chaque paquet de données, à partir duquel une action est attribuée à chaque paquet d'après l'ensemble des règles. Ainsi, un grand nombre de paquets de données correspondant à une variété importante d'actions attribuées à chacun d'eux peut .être traité avec une opération unique d'analyse des contenus de ces paquets.

En général, une mémoire Trie se présente sous la forme d'un tableau dont les lignes, appelées registres, comportent un nombre fixe de cellules, par exemple 4, 8, 16 ou 32 cellules. La taille de la mémoire Trie correspond alors au nombre de registres de cette mémoire. La présente invention permet donc de réduire le nombre de registres nécessaires pour effectuer une analyse donnée du contenu des paquets de données.

Le procédé de configuration de la mémoire Trie de l'invention comprend la transcription de l'arbre d'analyse dans cette mémoire sous forme de références inscrites dans les cellules de la mémoire. Un arbre d'analyse volumineux requiert en général une mémoire Trie de taille d'autant plus grande. Il est par conséquent avantageux de concevoir l'arbre d'analyse et sa transcription de façon à réduire la taille nécessaire de la mémoire Trie.

Le nombre d'étages de noeuds de l'arbre d'analyse correspond au nombre d'emplacements à l'intérieur des paquets de données auxquels les chaînes binaires sont à lire.

On peut déterminer une borne supérieure de la dimension de l'arbre d'analyse de la façon suivante. Le premier étage de l'arbre d'analyse comprend le noeud racine comme unique noeud. Le second étage de l'arbre d'analyse comprend un nombre de noeuds au plus égal au nombre d'intervalles élémentaires définis pour l'emplacement placé en premier selon l'ordre retenu pour les emplacements. Le nombre de noeuds du troisième étage de l'arbre d'analyse est égal au plus au produit des deux nombres d'intervalles élémentaires respectivement définis pour les deux emplacements auxquels sont associés les deux premiers étages de noeuds. De façon récurrente, le nombre de noeuds d'un étage quelconque de l'arbre d'analyse associé à un emplacement donné est inférieur ou égal au produit des nombres d'intervalles élémentaires respectivement définis pour tous les emplacements précédant l'emplacement auquel est associé l'étage considéré selon l'ordre de tri des emplacements.

Si N désigne le nombre d'emplacements de chaînes binaires définis dans les paquets de données sur lesquels est basée l'analyse des paquets, le nombre de noeuds du dernier étage de l'arbre d'analyse est donc inférieur au produit des (N - 1) nombres d'intervalles élémentaires correspondant aux (N - 1) premiers emplacements selon l'ordre de tri des emplacements. Autrement dit, il est inférieur à la valeur égale au produit de tous les nombres d'intervalles élémentaires divisé par le nombre d'intervalles élémentaires du dernier emplacement selon cet ordre. Cette valeur constitue donc une borne supérieure du nombre de noeuds du dernier étage de l'arbre d'analyse, qui correspond à une limite supérieure de la taille de la mémoire Trie nécessaire. Pour des intervalles élémentaires fixés pour tous les emplacements, cette borne supérieure est la plus petite lorsque l'ordre de tri des emplacements est tel qu'est placé en dernier celui des emplacements pour lequel le plus grand nombre d'intervalles élémentaires a été défini.

Dans certaines applications du procédé selon l'invention, lés chaînes binaires lues auxdits emplacements sont des nombres ou des valeurs comprenant des nombres. Il est alors particulièrement commode de définir les intervalles élémentaires en respectant une relation d'ordre entre ces nombres, ou en utilisant une relation d'ordre adaptée à la structure des valeurs lues, pour permettre une configuration rapide de la mémoire Trie.

Dans un mode de réalisation préféré du procédé selon l'invention, la traduction de l'ensemble de règles en un arbre d'analyse est telle qu'au moins un noeud de l'arbre d'analyse soit le point d'arrivée de plusieurs arcs issus de noeuds de départ distincts de l'étage précédent. Ce mode de réalisation permet une compression des structures de classement définies dans la mémoire Trie, qui procure un gain spatial important dans cette mémoire.

Pour cela, on associe à chaque noeud de l'arbre d'analyse autre que la racine de l'arbre d'analyse un sous-arbre. Ce sous-arbre a une racine constituée par ledit noeud et est composé des noeuds, des arcs et des feuilles rencontrés à partir dudit noeud le long des différents chemins passant par ledit noeud. La traduction de l'ensemble de règles est alors opérée de façon telle que l'arbre d'analyse n'inclue pas de premier et second sous-arbres ayant des racines distinctes et tels qu'on puisse apparier leurs noeuds respectifs, leurs arcs respectifs et leurs feuilles respectives, de telle sorte que chaque noeud du premier sous-arbre soit apparié à un noeud du second sous-arbre appartenant au même étage, que chaque feuille du premier sous-arbre soit appariée à une feuille du second sous-arbre correspondant à une même action, et que deux arcs appariés des premier et second sous-arbres aient des noeuds de départ appariés et des points d'arrivée appariés et soient associés au même domaine de valeurs.

Selon une formulation particulière des règles de l'ensemble, chaque règle est définie par une action et des plages de valeurs correspondant respectivement à certains au moins des emplacements, et attribue ladite action aux paquets ayant, auxdits emplacements, des valeurs de chaînes binaires tombant respectivement dans lesdites plages. Pour un traitement générique de toutes les règles, on a recours à la précaution suivante : lorsque, pour un emplacement donné, une règle ne présente pas de plage explicitée, une plage lui est ajoutée qui correspond à cet emplacement et qui comprend l'ensemble des valeurs de chaînes binaires pouvant être lues dans des paquets de données à cet emplacement.

Pour une telle formulation des règles, on associe un sous-ensemble de règles à chaque noeud d'un (p+1)-ième étage de l'arbre d'analyse, p étant un entier plus grand que 0. Ledit sous-ensemble est composé des règles de l'ensemble telles que chaque plage de valeurs correspondant à un emplacement associé à l'un des p premiers étages de l'arbre ait un recouvrement non vide avec le domaine de valeurs associé à l'arc de chaque chemin passant par ledit noeud et ayant son noeud de départ dans ledit étage.

On associe au noeud racine un sous-ensemble constitué par l'ensemble des règles.

La traduction de l'ensemble de règles comprend alors les étapes suivantes, pour chaque noeud du p-ième étage associé à un premier sous-ensemble de règles :
- déterminer des domaines de valeurs couvrant des valeurs de chaîne binaire pouvant apparaître au p-ième emplacement selon ledit ordre, chaque domaine étant tel que l'action attribuée par chacune des règles du premier sous-ensemble ne soit pas modifiée par un changement, à l'intérieur dudit domaine, de la valeur de la chaîne binaire située au p-ième emplacement dans un paquet traité ; et
- pour chacun desdits domaines de valeurs :
   - générer un arc associé audit domaine, ayant ledit noeud du p-ième étage pour noeud de départ ;
   - détecter chaque règle du premier sous-ensemble qui est définie par au moins une plage de valeurs incluant ledit domaine ;
   - si aucune règle n'est détectée, affecter une feuille de l'arbre correspondant à une action par défaut comme point d'arrivée dudit arc ;
   - si pour chaque règle détectée, aucune plage de valeurs ne correspond à l'un quelconque des emplacements suivant le p-ième emplacement selon ledit ordre, affecter une feuille de l'arbre correspondant à une action d'une règle détectée comme point d'arrivée dudit arc ;
   - si pour au moins une règle détectée, une plage de valeurs correspond à l'un des emplacements suivant le p-ième emplacement selon ledit ordre, affecter un noeud du (p+1)-ième étage de l'arbre comme point d'arrivée dudit arc, ledit noeud du (p+1)-ième étage étant associé à un second sous-ensemble composé des règles détectées du premier sous-ensemble.

Des priorités peuvent être respectivement allouées aux règles de l'ensemble. Dans ce cas, lorsque plusieurs règles sont détectées et aucune de leurs plages de valeurs ne correspond à l'un des emplacements suivant le p-ième emplacement, l'action correspondant à la feuille de l'arbre affectée audit arc est celle de l'une des règles détectées, sélectionnée sur la base des priorités allouées.

Afin d'éviter que l'arbre d'analyse ne comporte des sous-arbres ayant des racines respectives distinctes et dont on peut apparier, entre eux, les noeuds, arcs et feuilles appartenant respectivement à chacun d'eux, on exécute les étapes suivantes lorsqu'on a détecté au moins une règle ayant une plage de valeurs correspondant à l'un des emplacements suivant le p-ième emplacement :
- rechercher s'il a déjà été généré un noeud du (p+1)-ième étage de l'arbre associé au second sous-ensemble ;
- si la recherche échoue, générer un tel noeud dans le (p+1)-ième étage ;
- si la recherche identifie un noeud du (p+1)-ième étage, affecter le noeud identifié comme point d'arrivée dudit arc.

La présente invention concerne aussi un dispositif de traitement de paquets de données, défini dans la revendication 11, comprenant une mémoire associative de type Trie et un contrôleur adapté pour mettre en oeuvre un procédé de configuration de la mémoire Trie tel que défini ci-dessus. Ces dispositifs peuvent notamment être utilisés dans les applications suivantes :
- l'acheminement par un réseau de communication de paquets de données en fonction de règles d'acheminement appliquées à ces paquets ;
- le contrôle d'accès à un réseau de communication par des paquets de données en fonction de règles de contrôle d'accès à ce réseau appliquées à ces paquets ;
- l'acquisition d'informations concernant des paquets de données transmis par un réseau de communication.

Les paquets de données peuvent être notamment des cellules ATM porteuses de trames AAL 5 ou des paquets IP.

D'autres particularités et avantages du procédé de la présente invention apparaîtront dans la description ci-après d'exemples de mise en oeuvre non limitatifs, en référence aux dessins annexés, dans lesquels :
- la figure 1 est un schéma synoptique d'un dispositif de contrôle d'accès dans lequel est mis en oeuvre le procédé de l'invention ;
- la figure 2 est un tableau décrivant des informations traitées par des analyseurs de trafic du dispositif de la figure 1 ;
- la figure 3 représente un arbre d'analyse résultant de deux règles particulières appliquées à des couples de nombres (x, y), et n'utilisant pas la présente invention ;
- la figure 4 représente un second arbre d'analyse correspondant aux règles données pour l'arbre d'analyse de la figure 3, en utilisant le classement des emplacements selon la présente invention ;
- la figure 5 représente un arbre d'analyse résultant de trois règles particulières appliquées à des triplets de nombres (x, y, z), et n'utilisant pas la présente invention ;
- la figure 6 représente un second arbre d'analyse correspondant aux règles données pour l'arbre d'analyse de la figure 5, en utilisant le classement des emplacements selon la présente invention ;
- la figure 7 représente un troisième arbre d'analyse correspondant aux règles données pour l'arbre d'analyse de la figure 5, en utilisant en outre des regroupements de sous-arbres selon la présente invention ;
- la figure 8 est un schéma synoptique des étapes de création d'un nouvel arc selon le mode de mise en oeuvre préféré du procédé de l'invention ;
- la figure 9 représente un quatrième arbre d'analyse correspondant aux règles données pour l'arbre d'analyse de la figure 5, en utilisant le classement des emplacements et la méthode de création des arcs de la figure 8 .

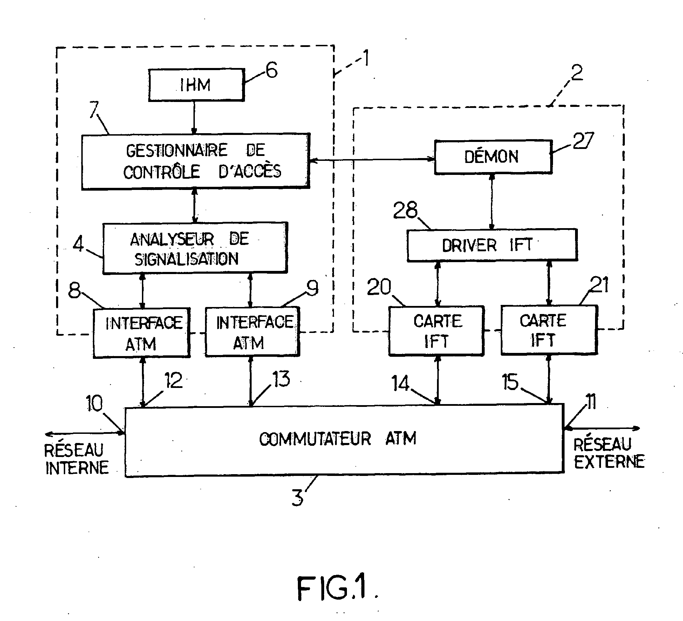

La structure d'un dispositif de contrôle d'accès disposé entre deux réseaux de transmission ATM (« Asynchronous Transfert Mode »), dans lequel peut être mis en oeuvre le procédé de l'invention, est décrite en détail dans la demande de brevet WO 0209367, publiée le 31 janvier 2002.Comme indiqué sur la figure 1, un dispositif de contrôle d'accès peut être composé de deux parties principales 1, 2 coopérant avec un commutateur ATM 3. La première partie 1 est dédiée à la prise en compté d'une politique de contrôle d'accès et à l'analyse de là signalisation ATM. Le résultat de cette analyse est utilisé pour construire dynamiquement une configuration. Celle-ci est utilisée par la seconde partie 2 pour fournir un service de contrôle d'accès basé sur les informations transportées dans les cellules ATM. Cette seconde partie 2 est capable de récupérer les informations de niveau ATM, IP et transport afin de décider si une communication doit être autorisée ou interdite. La configuration de l'ensemble se fait au moyen d'un langage unique.

La partie 1 peut être réalisée au moyen d'une station de travail, telle qu'une station commercialisée par la société Sun Microsystem, Inc. L'analyseur de signalisation 4 est l'élément de cette partie 1 qui effectue les actions de contrôle d'accès au niveau de la signalisation ATM en combinaison avec le gestionnaire de contrôle d'accès 7.

La partie 2 peut être réalisée au moyen d'une station de type PC fonctionnant par exemple avec le système d'exploitation Solaris x86. Cette station est équipée de cartes 20, 21 d'analyse en temps réel des cellules ATM, ou analyseurs de trafic, ci-après appelées cartes IFT (« IP Fast Translator »), qui assurent les actions de contrôle d'accès cellule ATM par cellule ATM.

Afin de permettre l'expression de politiques de contrôle d'accès, on utilise un Langage de Définition de Politique de Contrôle d'Accès (ACPDL, « Access Control Policy Description Language »). La définition de l'ACPDL est basée sur le Langage de Description de Politique (PDL) en cours de définition au sein du groupe de travail travaillant sur les politiques à l'IETF (voir J. Strassner, et al., « Policy Framework Definition Language », draft-ietf-policy-framework-pfdl-00.txt, Internet Engineering Task Force, 17 novembre 1998). Dans ce langage, une politique est définie par un ensemble de règles, chaque règle étant elle même constituée d'un ensemble de conditions et d'une action qui est exécutée lorsque l'ensemble des conditions est rempli. L'expression suivante (exprimée dans le formalisme Backus Naur, BNF) décrit la forme générale d'une règle :

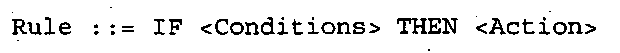

Toutes les conditions ont la même structure générique exprimée ci-dessous au moyen du formalisme BNF:

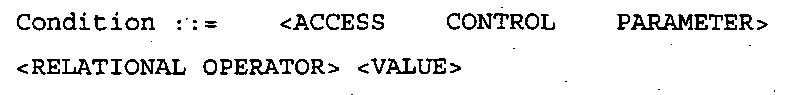

En fonction du niveau dans la pile de protocole, plusieurs types de paramètres de contrôle d'accès peuvent être utilisés :
- au niveau ATM, les paramètres intéressants sont décrits dans l'article de O. Paul, et al., « Manageable parameters to improve access control in ATM networks », HP-OVUA Workshop, Rennes, France, avril 1998. Parmi ceux-ci, on peut choisir le type de trafic, les identificateurs de connexion, les informations d'adressage, les descripteurs de QoS et les descripteurs de service ;
- au niveau transport, la plupart des paramètres considérés sont ceux qui sont utilisés habituellement afin de réaliser le filtrage des paquets dans les routeurs filtrants (par exemple les informations d'adressage, les ports source et destination, les drapeaux dans le cas des connexions TCP, etc.) ;
- au niveau application, deux paramètres génériques sont considérés: l'identificateur de l'utilisateur de l'application ainsi que l'état de l'application ;
- des informations temporelles sont également incluses afin de spécifier quand une règle doit être appliquée.

Les actions ont également une structure générique (notation BNF) :

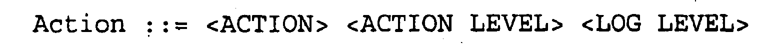

Une action se décompose en trois parties. La première indique si la communication décrite par les conditions doit être autorisée ou interdite. Le paramètre <ACTION LEVEL> correspond à la couche protocolaire dans laquelle doit être effectuée l'action. La dernière partie décrit l'importance accordée à l'événement de contrôle d'accès et permet la classification des résultats.

Le paragraphe suivant montre comment le langage ACPDL peut être utilisé afin d'exprimer un exemple de service de contrôle d'accès. Dans cet exemple, chaque équipement est identifié par son adresse source (IP_SRC_ADDRESS) et son adresse destination (IP_DST_ADDRESS). Le service WWW est identifié par les ports source (SRC_PORT) et destination (DST_PORT). La deuxième ligne de commande donnée dans l'exemple est utilisée afin d'interdire les demandes de connexion sur le port WWW d'une station interne.

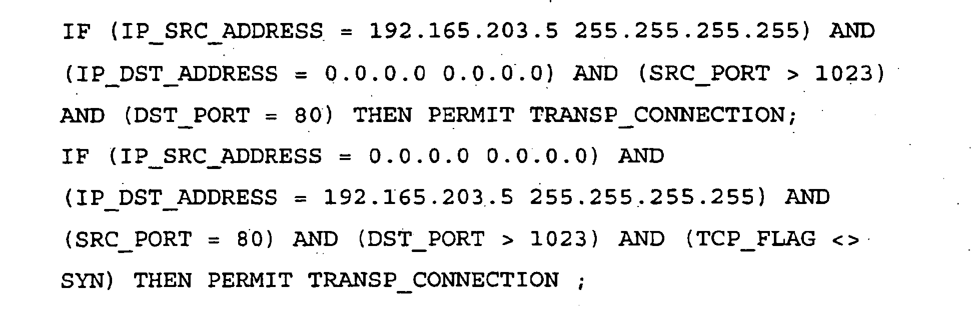

La politique de contrôle d'accès est définie par l'officier de sécurité au moyen d'une interface homme-machine (IHM) 6 de la station 1, en utilisant le langage ACPDL. Elle est utilisée pour configurer les deux parties du contrôleur. Cependant cette politique ne peut pas être utilisée directement par les deux outils de contrôle d'accès 4, 20/21. Le gestionnaire 7 est le module qui permet de résoudre ce problème en traduisant la politique de contrôle d'accès en commandes de configuration pour les deux outils.

Ce processus de traduction peut être divisé en deux parties principales. La première est la traduction de la politique en trois configurations statiques :
- au niveau de la signalisation ATM, cette configuration comprend une description des communications devant être contrôlées. Chaque communication est décrite par un ensemble d'éléments d'information (IE) et par une action (Autoriser ou Interdire). Cette configuration est envoyée à l'analyseur de signalisation 4 ;
- au niveau TCP/IP la configuration comprend une description des paquets devant être contrôlés. Cette partie de la politique peut être générique, ce qui signifie que les règles qui y sont décrites ne sont pas dédiées à une connexion ATM particulière. Cette partie peut aussi être rattachée à une connexion ATM par l'expression de conditions portant sur des identificateurs de connexion ;
- au niveau cellule ATM, la configuration comprend une description des cellules ATM qui doivent être contrôlées. Ces cellules sont divisées selon les champs qu'elles peuvent contenir. L'ensemble des valeurs que chaque champ peut prendre est décrit par un arbre. Cette configuration est envoyée aux cartes IFT 20, 21.

La seconde partie du processus de configuration a lieu lorsqu'une demande de connexion est reçue par l'analyseur de signalisation 4. Une fois que le processus de contrôle d'accès a été réalisé, l'analyseur de signalisation 4 envoie au gestionnaire 7 les informations nécessaires pour effectuer la configuration dynamique des cartes IFT 20, 21. Les information fournies par l'analyseur de signalisation 4 comprennent :
- les identificateurs de connexion VPI et VCI (« Virtual Path Identifier», « Virtual Channel Identifier ») ;
- les adresses ATM source et destination ;
- un descripteur de service (Classical IP over ATM (CLIP), Applications natives ATM). Quand une couche additionnelle est utilisée au dessus du modèle ATM, l'analyseur de signalisation 4 fournit également l'encapsulation (avec ou sans entête SNAP /LLC) ;
- la direction de la communication.

Dans un environnement CLIP, le gestionnaire 7 utilise les adresses ATM source et destination afin de trouver les adresses IP correspondantes. Cette traduction est effectuée au moyen d'un fichier décrivant les correspondances entre adresses IP et ATM. Elle peut aussi utiliser un serveur de résolution d'adresse (ATMARP).

Le gestionnaire 7 essaie ensuite de trouver une correspondance entre les adresses IP et les règles génériques de contrôle d'accès de niveau TCP/IP. Le sous-ensemble de règles obtenu est instancié avec les adresses IP et associé aux autres informations (adresses, encapsulation, identificateurs de connexion, direction). Cet ensemble d'informations est utilisé par le gestionnaire afin de construire l'arbre d'analyse qui sera utilisé pour configurer les cartes IFT, et est conservé durant toute la vie de la connexion. A la fermeture de connexion, le gestionnaire 7 reçoit un signal de l'analyseur de signalisation 4 afin de reconfigurer éventuellement les cartes IFT 20, 21 en effaçant les informations relatives à la connexion. Le gestionnaire détruit ensuite les informations associées à la connexion.

L'analyseur de signalisation 4 repose sur deux fonctions. La première est la redirection des messages de signalisation provenant des réseaux interne et externe vers un filtre appartenant à l'analyseur 4. La seconde est la capacité de décomposer les messages de signalisation suivant la spécification UNI 3.1 de l'ATM Forum (« ATM User-Network Interface Specification, Version 3.1 », ATM Forum, juillet 1994) et de transmettre ou de supprimer ces messages en fonction de la configuration de contrôle d'accès fournie par le gestionnaire 7.

La station 1 est pourvue de deux cartes d'interface ATM 8, 9 respectivement reliées à deux interfaces 12, 13 du commutateur 3. Les autres interfaces représentées du commutateur 3 sont notées 10 (réseau interne), 11 (réseau externe), 14 et 15 (cartes IFT 20 et 21).

Afin de rediriger la signalisation, le commutateur ATM 3 est configuré de façon à diriger les messages de signalisation vers la station 1. Cette configuration peut être réalisée en désactivant le protocole de signalisation sur les interfaces 10, 11, 12 et 13. Un canal virtuel (VC) doit être ensuite construit entre chaque paire d'interfaces pour chaque canal de signalisation. Les canaux de signalisation sont par exemple identifiés par un identifiant de canal virtuel (VCI) égal à 5.

Avec la configuration précédente, les messages de signalisation provenant du réseau externe sont dirigés vers l'interface 13 de la station 1 alors que les messages provenant du réseau interne sont dirigés vers l'interface 12.

Lorsque des messages de signalisation sont reçus par l'analyseur de signalisation 4, ceux-ci sont décomposés en éléments d'information suivant la spécification UNI 3.1. Les éléments d'information sont ensuite décomposés en informations élémentaires telles que les adresses, les identificateurs de connexion, la référence d'appel, les descripteurs de qualité de service et les identificateurs de service. L'analyseur 4 cherche ensuite si le message peut être associé à une connexion existante au moyen du type du message et de la référence d'appel. Si la connexion est nouvelle, un descripteur de connexion contenant ces informations est construit. Quand la connexion existe déjà, le descripteur de connexion est mis à jour. Le descripteur de connexion est associé à l'état de la connexion et à l'interface d'origine. Il est identifié par un identificateur de connexion. Le descripteur est ensuite envoyé à au filtre de l'analyseur de signalisation 4 afin d'être analysé.

Lorsque le filtre de l'analyseur de signalisation 4 reçoit un descripteur de connexion, il compare les paramètres décrivant la connexion avec l'ensemble des communications décrit par la politique de contrôle d'accès. Si une correspondance est trouvée, le filtre applique l'action associée à la communication. Dans le cas contraire, il applique l'action par défaut qui est d'interdire la connexion. Lorsque l'action consiste en une interdiction, le filtre détruit le descripteur de connexion. Dans le cas contraire, il envoie le descripteur de connexion à un module de construction des messages. Lorsque le descripteur de connexion indique qu'un message CONNECT a été reçu, un sous-ensemble des paramètres du descripteur de connexion est envoyé au gestionnaire 7 comme indiqué ci-dessus :
- les identificateurs de connexion VPI /VCI, obtenus à partir de l'IE « Connection Identifier » ;
- les adresses ATM source et destination, fournies par les IE « Called Party Identifier» et « Calling Party Identifier» ;
- les descripteurs de service, obtenus à partir des IE « Broadband Higher Layer Identifier (BHLI) » et « Broadband Lower Layer Identifier (BLLI) » ;
- la direction, fournie par le nom de l'interface associée au descripteur de connexion.

Lorsque le descripteur de connexion indique la réception d'un message RELEASE_COMPLETE, qui achève la libération d'une connexion, le descripteur de connexion est de nouveau envoyé au gestionnaire 7. Les communications entre le gestionnaire 7 et le filtre de signalisation peuvent se faire de façon classique au moyen d'un segment de mémoire partagé et de signaux.

Les cartes IFT considérées ici pour la mise en oeuvre de l'invention sont du type décrit dans la demande de brevet européen EP1030493 déposée le 9 février 2000 par la demanderesse et publiée le 23 août 2000. Elles sont basées sur l'utilisation d'une mémoire associative de type Trie pour l'analyse de parties du contenu de cellules ATM, et pour l'attribution, à chaque cellule d'une même trame, d'une action définie par la politique de contrôle d'accès. Ces cartes possèdent les caractéristiques remarquables suivantes :
- elles permettent l'analyse de la première cellule de chaque trame AAL5 («ATM Adaptation Layer n°5») et la modification des cellules correspondantes en fonction de l'analyse ;
- elles peuvent fonctionner à la vitesse de 622 Mbit/s grâce à un procédé rapide et flexible d'analyse ;
- le délai introduit par l'analyse peut être borné et dépend de la configuration de la carte ;
- elles peuvent être configurées dynamiquement sans interrompre le processus d'analyse ;
- elles sont intégrables dans des équipements de type PC sous Solaris.

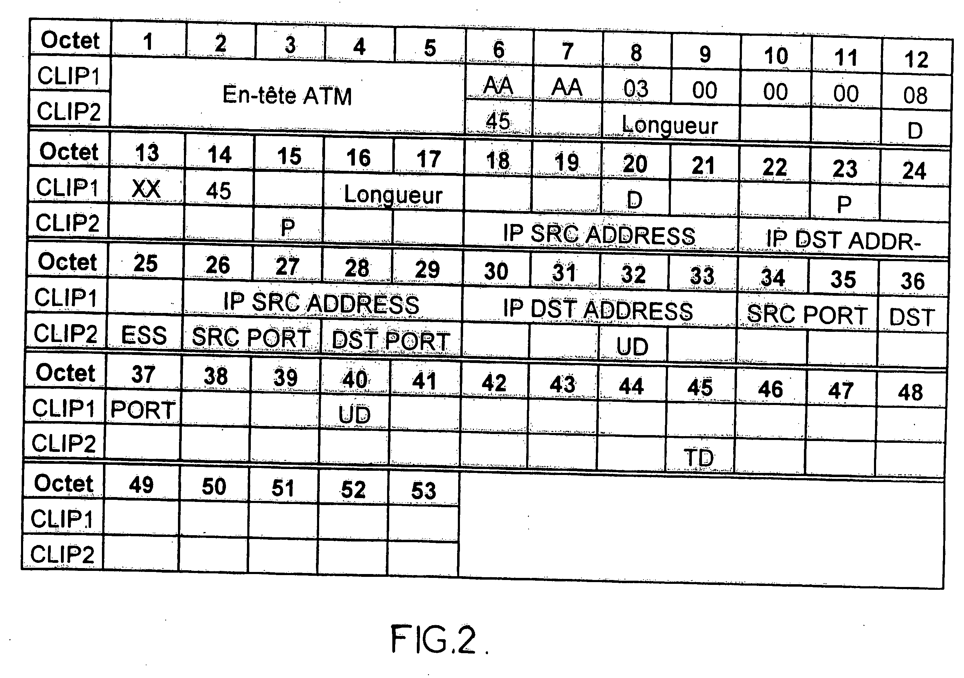

La figure 2 décrit les informations pouvant être analysées par les cartes IFT 20, 21 dans le cas des protocoles CLIP (CLIP1) et CLIP sans encapsulation SNAP-LLC (CLIP2). Les champs UD et TD indiquent le début des segments de données pour les protocoles UDP et TCP, respectivement. Ceci signifie que, dans le cas général, les cartes IFT ont accès aux informations de niveau ATM, IP, TCP, UDP et dans certains cas de niveau application. Il faut cependant noter que les champs optionnels pouvant se trouver dans le paquet IP ne sont pas représentés. La présence de ces champs (de longueur variable) peut repousser les informations de niveau TCP ou UDP dans la seconde cellule ATM.

Comme dans le cas de la signalisation, la première partie du processus de contrôle d'accès au niveau cellule ATM consiste à rediriger le trafic provenant des réseaux interne et externe vers les cartes IFT 20, 21. Cependant, dans ce cas, la configuration doit préserver la configuration réalisée pour le contrôle de la signalisation. A titre d'exemple, les canaux virtuels identifiés par une valeur de VCI égal à 31 sont volontairement laissés libres afin de permettre au commutateur ATM 3 de rejeter les cellules ATM appartenant à une communication qui doit être interdite. Le commutateur ATM 3 est alors configuré afin de créer un canal virtuel pour chaque valeur de VCI différente de 5 et de 31 entre chaque paire d'interface (10, 14) et (11, 15).

Les cartes IFT considérées ne permettent que l'analyse de flux unidirectionnels. Ceci signifie que les flux provenant des réseaux interne et externe doivent être séparés. Cette opération est particulièrement simple dans le cas d'une couche physique de type Mono Mode Fiber utilisé par les cartes puisque les fibres d'émission et de réception sont physiquement séparées.

La seconde partie du processus de contrôle d'accès est la configuration des cartes IFT 20, 21 afin qu'elles fournissent le service de contrôle d'accès désiré. Comme indiqué précédemment, cette configuration est faite par le gestionnaire 7. Les cartes IFT ont été conçues à l'origine pour être gérées à distance par plusieurs gestionnaires. Un logiciel approprié 27 (démon RPC) est alors utilisé dans la station 2 pour sérialiser les demandes adressées au circuit de commande 28 (driver) des cartes 20, 21. Du côté du gestionnaire 7, une librairie donne accès aux fonctions de configuration. Cette librairie traduit les appels locaux en appels à distance sur la station 2. Les communications entre les deux équipements se font par exemple au travers d'un réseau dédié de type Ethernet.

La configuration des mémoires Trie des cartes 20, 21 se base sur une description des communications à contrôler sous forme d'arbres. Chaque branche de l'arbre décrit la valeur codée d'une chaîne binaire, par exemple de 4 bits, qui peut être trouvée pendant le processus d'analyse. Ce processus consiste à parcourir la portion de cellule ATM à analyser par tranches de 4 bits successifs servant à accéder au contenu de la mémoire Trie incluse dans chaque carte IFT. Un arbre d'analyse, construit à partir d'une instruction de contrôle d'accès fournie par le gestionnaire 7, correspond à un enchaînement donné de tranches de 4 bits trouvées à des emplacements déterminés en parcourant la cellule ATM. La racine de l'arbre correspond à un portier qui est reconnu afin de commencer l'analyse de l'arbre. Des exemples d'arbres d'analyse et de configurations résultantes de mémoires Trie de cartes IFT sont maintenant présentés.

De façon générale, chaque emplacement à analyser, ou champ, comprend un nombre de bits fixé par la dimension de ce champ, par exemple 32 bits. Son analyse par tranches est effectuée de façon à ce que les valeurs que peut revêtir chaque tranche correspondent aux cellules élémentaires d'un ou plusieurs registres de la mémoire Trie utilisée. Un quartet, qui peut prendre 2⁴=16 valeurs, est notamment adapté à une mémoire Trie dont chaque registre comprend 16 cellules élémentaires. Plusieurs registres, voire un grand nombre de registres, sont donc nécessaires pour l'analyse d'un champ, selon la dimension de ce champ par rapport au nombre de cellules élémentaires d'un registre.

L'analyse d'un champ comprend en général les analyses d'un grand nombre de tranches de bits, enchaînées successivement jusqu'à la poursuite par l'analyse d'un autre champ de la même trame, ou jusqu'à l'obtention d'une action attribuée à la trame analysée par la politique de contrôle d'accès. Par souci de simplicité et de clarté d'illustration de l'invention, bien que cela ne corresponde pas à une situation réelle, les exemples présentés dans la suite ne comportent chacun qu'un seul quartet pour chaque champ sur lequel porte l'analyse. Pour les mêmes raisons de simplicité et de clarté, le nombre de règles considérées et le nombre de champs pris en considération pour l'analyse sont très réduits, alors qu'une politique de contrôle d'accès réelle peut comprendre de nombreuses règles d'accès portant sur un plus grand nombre de champs d'information de contrôle de protocole.

Un premier exemple est donné pour deux champs x et y lus dans des cellules ATM, représentés par des couples (x, y). Les chaînes binaires lues dans les champs x et y sont des quartets représentés par des nombres hexadécimaux compris entre 0 et F.

Les règles considérées, au nombre de deux, sont les suivantes :
- Règle Re1 : si x ≥ 7 et 3 ≤ y ≤ 8 , alors on effectue une action A1 ;
- Règle Re2 : si 2 ≤ x ≤ B et y ≥ 3 , alors on effectue une action A2.

La règle Re1 est supposée prioritaire par rapport à la règle Re2, si bien que l'action A1 est effectuée seule lorsqu'elle est attribuée simultanément à l'action A2 à un même couple (x, y), respectivement par chaque règle. Si la condition d'aucune des deux règles Re1 et Re2 n'est satisfaite par un couple (x, y) donné, alors une action par défaut O est attribuée à ce couple.

Les actions A1, A2 et O peuvent être de simples actions de rejet (« DENY ») ou d'acceptation (« PERMIT ») des trames. Elles peuvent aussi correspondre à des actions plus complexes, telle que la poursuite du contrôle d'accès par l'examen d'autres paramètres tels que des domaines autorisés attribués à un destinataire de la trame considérée.

L'action de rejet ou d'acceptation est codée au moyen d'un noeud particulier provoquant la fin de l'analyse et renvoyant l'identificateur de connexion qui sera attribué à toutes les cellules de la trame AAL 5 correspondante. L'action « DENY » est codée en dirigeant la trame vers le canal non configuré (VCI 31) au niveau du commutateur 3. Le VCI 31 est ainsi utilisé comme VCI poubelle pour jeter toutes les cellules ATM non conformes à la politique de sécurité. L'action «PERMIT» est codée en laissant l'identificateur de connexion inchangé.

L'ensemble des nombres pouvant être lus dans le champ x est réparti par les règles Re1 et Re2 selon les 4 intervalles suivants : x < 2 , 2 ≤ x < 7, 7 ≤ x ≤ B et x > B. De façon analogue, l'ensemble des nombres pouvant être lus dans le champ y est réparti selon les 3 intervalles suivants : y < 3 , 3 ≤ y ≤ 8 et y > 8 .

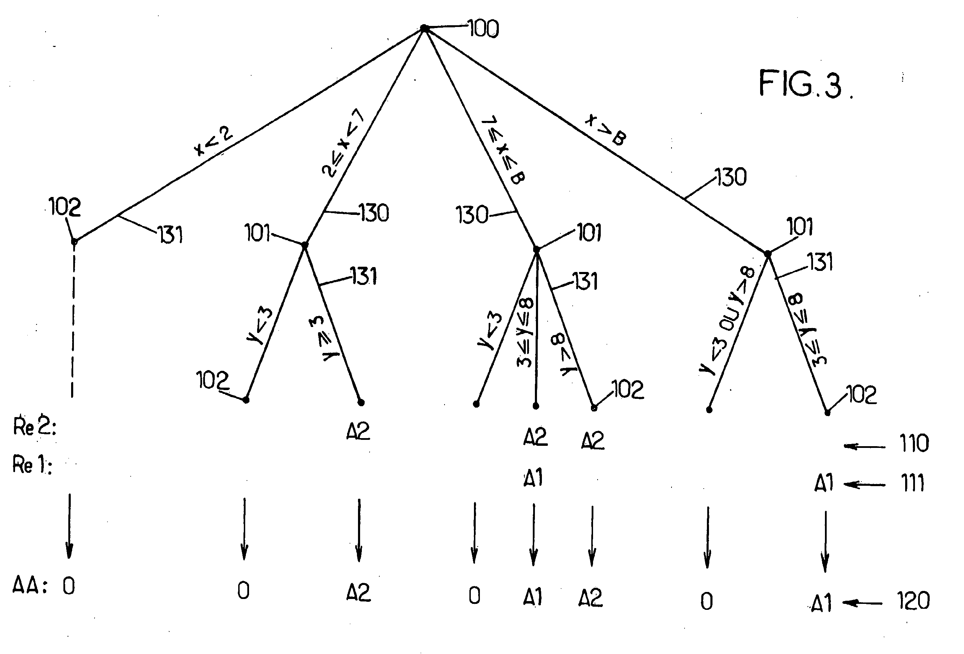

Un arbre d'analyse résultant de l'application des deux règles Re1 et Re2 aux couples (x, y) est représenté sur la figure 3, en analysant d'abord la valeur de x, puis la valeur de y. Le noeud racine 100 représente le point de départ de l'analyse des couples (x, y). Trois noeuds 101, reliés chacun au noeud racine 100 par un arc 130, correspondent à des résultats de l'analyse de la valeur de x par rapport aux 4 intervalles identifiés pour x. Des noeuds 102, ou feuilles de l'arbre d'analyse, reliés aux noeuds 101 par des arcs 131, correspondent respectivement pour les résultats précédents de l'analyse de la valeur de x aux résultats de l'analyse de la valeur de y par rapport aux 3 intervalles identifiés pour y. Pour certaines valeurs de x, par exemple x < 2, l'analyse des couples (x, y) ne nécessite pas d'analyse de la valeur de y pour déterminer l'action attribuée par les deux règles Re1 et Re2. Dans ce cas, un arc 131 relie directement une feuille 102 au noeud racine 100. Dans d'autres cas, 2 ≤ X < 7 et x > B, l'analyse de la valeur de y ne fait pas intervenir toutes les bornes d'intervalles définies pour y. En effet, certains intervalles définis pour y peuvent être réunis lorsqu'ils correspondent à des mêmes actions respectives attribuées par les deux règles.

Des lignes 110 et 111 indiquent respectivement les feuilles 102 pour lesquelles l'action A2 et/ou l'action A1 est attribuée par les règles Re2 et Re1, considérées séparément. Enfin, en fonction de la priorité de ces actions, une ligne 120 indique l'action AA correspondant à chaque feuille 102 résultant de l'application des deux règles Re1 et Re2 combinées. Ainsi, la ligne 120 reprend la ligne 111 en la complétant par l'action A2 pour celles des feuilles 102 pour lesquelles la ligne 110 attribue l'action A2 alors que la ligne 111 ne leur attribue aucune action. En outre, la ligne 120 attribue l'action par défaut O aux feuilles 102 considérées dans aucune des deux lignes 110 et 111.

On utilise une mémoire Trie dont les registres successifs R0, R1, R2, ... comprennent tous seize cellules élémentaires. Un exemple de configuration de cette mémoire Trie correspondant à l'arbre d'analyse de la figure 3 est le suivant :

| | **0** | **1** | **2** | **3** | **4** | **5** | **6** | **7** | **8** | **9** | **A** | **B** | **C** | **D** | **E** | **F** |
|---|---|---|---|---|---|---|---|---|---|---|---|---|---|---|---|---|
| **R0** | O | O | 1 | 1 | 1 | 1 | 1 | 2 | 2 | 2 | 2 | 2 | 3 | 3 | 3 | 3 |
| **R1** | O | O | O | A2 | A2 | A2 | A2 | A2 | A2 | A2 | A2 | A2 | A2 | A2 | A2 | A2 |
| **R2** | O | O | O | A1 | A1 | A1 | A1 | A1 | A1 | A2 | A2 | A2 | A2 | A2 | A2 | A2 |
| **R3** | O | O | O | A1 | A1 | A1 | A1 | A1 | A1 | O | O | O | O | O | O | O |
| **R4** | | | | | | | | | | | | | | | | |
| **R5** | | | | | | | | | | | | | | | | |

Dans cette configuration de la mémoire Trie, le registre portier R0 est attribué à l'analyse de la valeur de x, et les registres R1, R2 et R3 à l'analyse de la valeur de y. R0 est donc le registre par lequel l'analyse de chaque couple (x, y) est commencée. Selon la valeur de x du couple (x, y) analysé, le registre R0 renvoie sur l'un des registres R1, R2 ou R3 pour la poursuite de l'analyse. Ce dernier registre indique alors, en fonction de la valeur de y du couple (x, y) analysé, l'action à effectuer associée à la feuille 102 de l'arbre d'analyse à laquelle aboutit le chemin qui correspond aux résultats successifs des analyses de x et de y. Selon cette configuration, 4 registres de mémoire Trie sont nécessaires pour permettre l'analyse de tous les couples possibles (x, y)

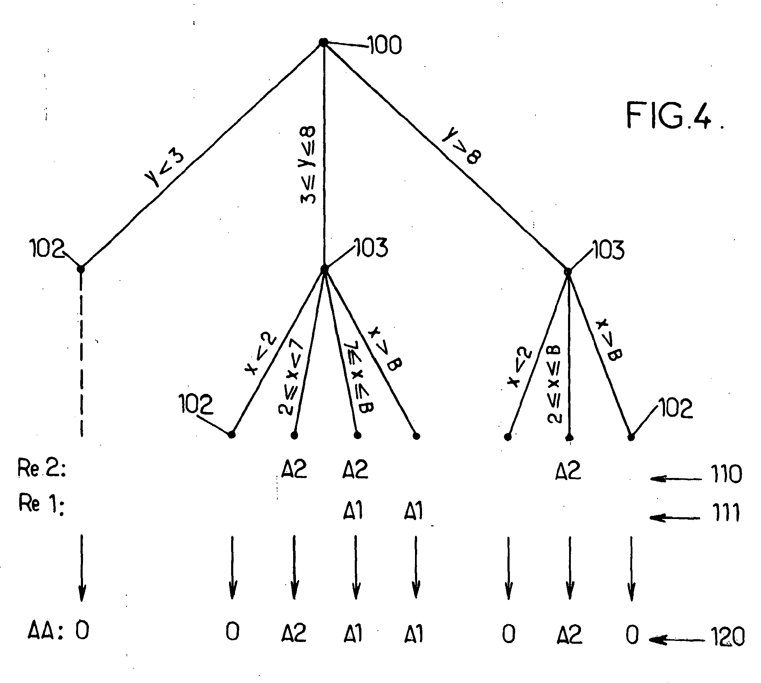

En analysant d'abord la valeur y, puis la valeur x, pour l'application des mêmes règles Re1 et Re2, on obtient un arbre d'analyse tel que représenté sur la figure 4. Des références identiques entre les figures 3 et 4 correspondent à des significations identiques. Sur la figure 4, les noeuds intermédiaires 103 correspondent aux résultats de l'analyse de la valeur de y, effectuée en premier, lorsque l'analyse de la valeur de x doit être effectuée ensuite. Pour chaque couple de nombres (x, y), cet arbre indique un même résultat d'application des règles Re1 et Re2, sous la forme de l'action AA indiquée par la ligne 120.

En appliquant, à partir l'arbre d'analyse de la figure 4, la même méthode que précédemment pour la configuration de la mémoire Trie, on obtient :

| | **0** | **1** | **2** | **3** | **4** | **5** | **6** | **7** | **8** | **9** | **A** | **B** | **C** | **D** | **E** | **F** |
|---|---|---|---|---|---|---|---|---|---|---|---|---|---|---|---|---|
| **R0** | O | O | O | 1 | 1 | 1 | 1 | 1 | 1 | 2 | 2 | 2 | 2 | 2 | 2 | 2 |
| **R1** | O | O | A2 | A2 | A2 | A2 | A2 | A1 | A1 | A1 | A1 | A1 | A1 | A1 | A1 | A1 |
| **R2** | O | O | A2 | A2 | A2 | A2 | A2 | A2 | A2 | A2 | A2 | A2 | O | O | O | O |
| **R3** | | | | | | | | | | | | | | | | |
| **R4** | | | | | | | | | | | | | | | | |

Ainsi, le classement selon l'invention des deux emplacements x et y permet, dans cet exemple, de réduire d'un registre la taille de la mémoire Trie nécessaire pour permettre l'application des mêmes règles de traitement.

Un deuxième exemple concerne un ensemble de règles appliquées à des triplets de nombres (x, y, z), chacun de ces nombres étant encore un nombre hexadécimal :
- Règle Re1 : si x ≥ A et 3 ≤ z ≤ 8, alors on effectue une action A1 ;
- Règle Re2 : si x > 5 et 2 ≤ y ≤ 9 et z ≥ 6, alors on effectue une action A2 ;
- Règle Re3 : si 3 ≤ x ≤ C , alors on effectue une action A3.

Dans cet exemple, la relation de priorité entre les trois règles est : Re2 > Re1 > Re3. Seule l'action la plus prioritaire est encore finalement affectée à chaque triplet, parmi par les actions attribuées par chacune des trois règles. Une action par défaut O est encore attribuée à un triplet (x, y, z) qui satisfait les conditions d'aucune des trois règles.

Ces trois règles définissent 5 intervalles pour le champ x: x < 3 , 3 ≤ x ≤ 5 , 5 < x < A , A ≤ x ≤ C , et x > C , 3 intervalles pour le champ y : y < 2 , 2 ≤ y ≤ 9 , et y > 9 , et 4 intervalles pour le champ z : z<3, 3 ≤ z ≤ 6 , 6 ≤ z ≤ 8 , et z > 8.

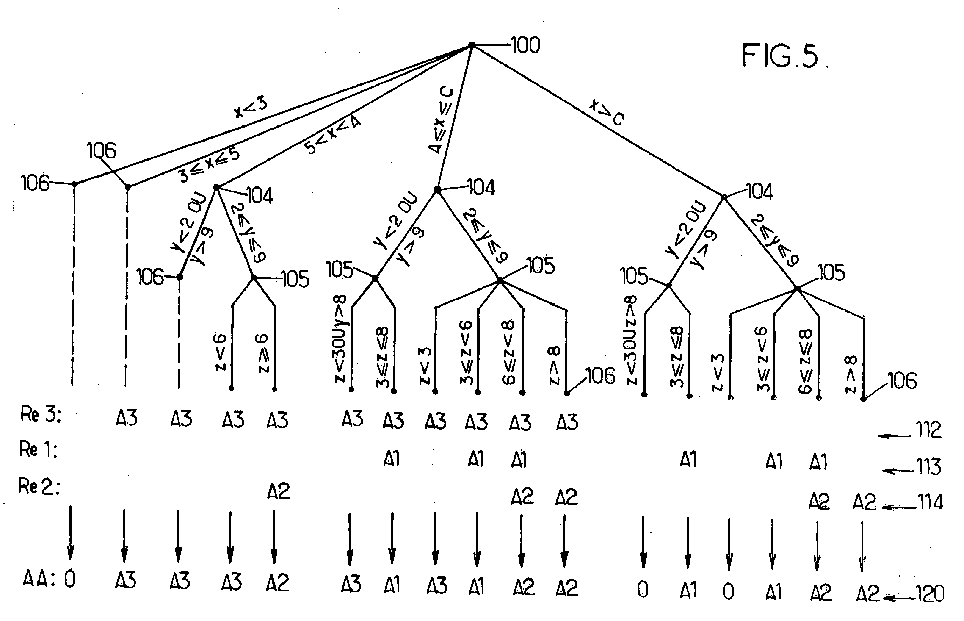

La figure 5 représente un arbre d'analyse correspondant aux trois règles Re1, Re2 et Re3 précédentes, en analysant d'abord la valeur de x, puis la valeur de y, et enfin la valeur de z. Cet arbre d'analyse est construit de la même façon que les arbres des figures 3 et 4. Les références 100 et 120 possèdent les significations déjà introduites. Des noeuds 104 correspondent aux résultats de l'analyse de la valeur de x qui ne permettent pas de déterminer directement l'action indiquée par chaque règle, à savoir 5 < x < A, A < x ≤ C et x > C. De même, des noeuds 105 correspondent aux résultats de l'analyse de la valeur de y lorsque l'analyse des triplets doit être encore poursuivie par l'analyse de la valeur de z. Selon les chemins, les feuilles 106 de l'arbre d'analyse sont reliées par des arcs directs aux noeuds 100, 104 ou 105.

Des lignes 112, 113 et 114 indiquent, pour chacune des feuilles 106, les actions respectivement indiquées par chacune des trois règles, prises dans l'ordre de priorité croissante. Une ligne 120 désigne l'action finale affectée à chaque triplet (x, y, z) en fonction de la priorité entre les actions indiquées par les trois règles.

On utilise, par exemple, encore une mémoire Trie à seize cellules élémentaires par registre. Dans ce cas, la configuration de la mémoire Trie, selon ce premier arbre d'analyse, nécessite autant de registres que de noeuds 100, 104 ou 105, soit 9 registres au total.

Un exemple de configuration de cette mémoire Trie correspondant à l'arbre d'analyse de la figure 5 est le suivant :

| | | | | | | | | | | | | | | | | |
|---|---|---|---|---|---|---|---|---|---|---|---|---|---|---|---|---|
| | **0** | **1** | **2** | **3** | **4** | **5** | **6** | **7** | **8** | **9** | **A** | **B** | **C** | **D** | **E** | **F** |
| **R0** | O | O | O | A3 | A3 | A3 | 1 | 1 | 1 | 1 | 3 | 3 | 3 | 6 | 6 | 6 |
| **R1** | A3 | A3 | 2 | 2 | 2 | 2 | 2 | 2 | 2 | 2 | A3 | A3 | A3 | A3 | A3 | A3 |
| **R2** | A3 | A3 | A3 | A3 | A3 | A3 | A2 | A2 | A2 | A2 | A2 | A2 | A2 | A2 | A2 | A2 |
| **R3** | 4 | 4 | 5 | 5 | 5 | 5 | 5 | 5 | 5 | 5 | 4 | 4 | 4 | 4 | 4 | 4 |
| **R4** | A3 | A3 | A3 | A1 | A1 | A1 | A1 | A1 | A1 | A3 | A3 | A3 | A3 | A3 | A3 | A3 |
| **R5** | A3 | A3 | A3 | A1 | A1 | A1 | A2 | A2 | A2 | A2 | A2 | A2 | A2 | A2 | A2 | A2 |
| **R6** | 7 | 7 | 8 | 8 | 8 | 8 | 8 | 8 | 8 | 8 | 7 | 7 | 7 | 7 | 7 | 7 |
| **R7** | ○ | O | O | A1 | A1 | A1 | A1 | A1 | A1 | O | O | O | O | O | O | ○ |
| **R8** | ○ | ○ | ○ | A1 | A1 | A1 | A2 | A2 | A2 | A2 | A2 | A2 | A2 | A2 | A2 | A2 |
| **R9** | | | | | | | | | | | | | | | | |
| **R10** | | | | | | | | | | | | | | | | |

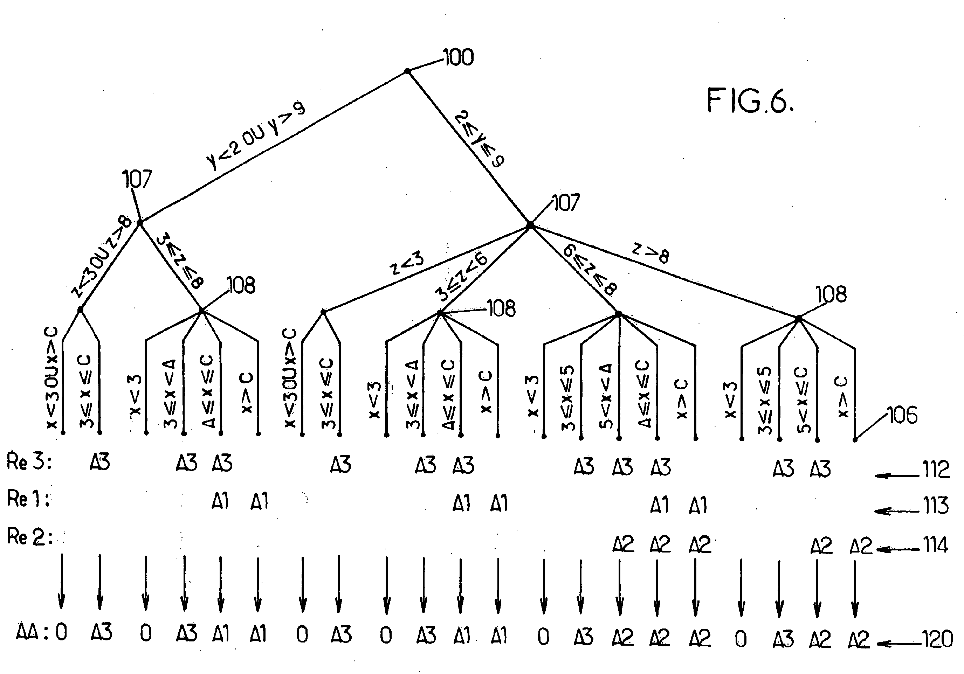

De façon analogue, la figure 6 représente un arbre d'analyse correspondant aux règles Re1, Re2 et Re3 en analysant d'abord la valeur de y, puis la valeur de z, et, en dernier, celle de x, conformément à l'ordre croissant du nombre d'intervalles définis respectivement pour x, y et z. Deux noeuds intermédiaires 107 correspondent aux résultats de l'analyse des valeurs de y, effectuée en premier lieu, et six noeuds intermédiaires 108 aux résultats de l'analyse des valeurs de z, effectuée ensuite.

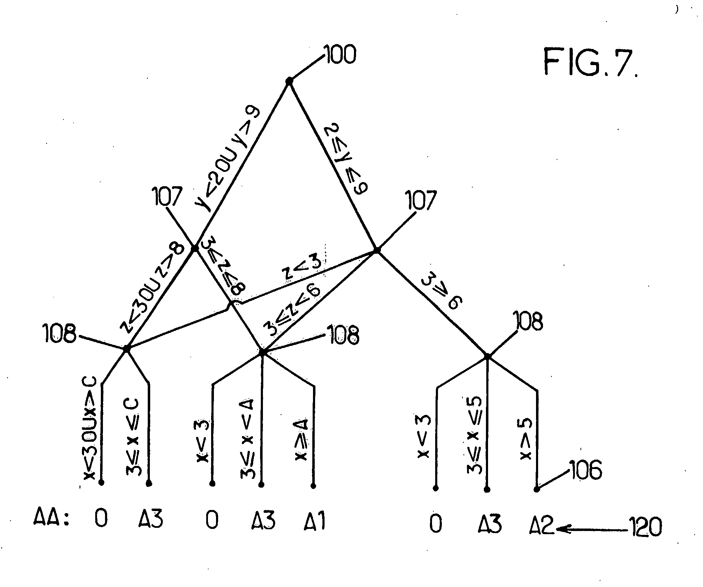

Dans cet arbre d'analyse de la figure 6, les sous-arbres correspondant aux résultats des analyses de y puis z suivants [(y < 2 ou y > 9) et (z < 3 ou z > 8)] d'une part, et [2 ≤ y ≤ 9 et z < 3] d'autre part, sont homologues. De même pour les sous-arbres [(y < 2 ou y > 9) et 3 ≤ z ≤ 8] d'une part, et [2 ≤ y ≤ 9 et 3 ≤ z < 6] d'autre part. Par ailleurs, sur la figure 6, les actions AA attribuées en fonction de la valeur de x, selon la ligne 120, pour des valeurs de y et z telles que [2 ≤ y ≤ 9 et 6 ≤ z ≤ 8] d'une part et [2 ≤ y ≤ 9 et z > 8] d'autre part sont identiques. L'arbre d'analyse de la figure 7 correspond alors à celui de la figure 6 en regroupant les sous-arbres homologues.

La configuration de la mémoire Trie, selon ce dernier arbre d'analyse, nécessite autant de registres que de noeuds 100, 107 ou 108, soit 6 registres au total. Ainsi, 3 registres de mémoire Trie ont été économisés par rapport à la configuration de la mémoire Trie issue de l'arbre d'analyse de la figure 5. Un exemple de configuration de la mémoire Trie qui correspond à l'arbre d'analyse de la figure 7 est:

| | **0** | **1** | **2** | **3** | **4** | **5** | **6** | **7** | **8** | **9** | **A** | **B** | **C** | **D** | **E** | **F** |
|---|---|---|---|---|---|---|---|---|---|---|---|---|---|---|---|---|
| **R0** | 1 | 1 | 4 | 4 | 4 | 4 | 4 | 4 | 4 | 4 | 1 | 1 | 1 | 1 | 1 | 1 |
| **R1** | 2 | 2 | 2 | 3 | 3 | 3 | 3 | 3 | 3 | 2 | 2 | 2 | 2 | 2 | 2 | 2 |
| **R2** | O | O | O | A3 | A3 | A3 | A3 | A3 | A3 | A3 | A3 | A3 | A3 | O | O | O |
| **R3** | O | O | O | A3 | A3 | A3 | A3 | A3 | A3 | A3 | A1 | A1 | A1 | A1 | A1 | A1 |
| **R4** | 2 | 2 | 2 | 3 | 3 | 3 | 5 | 5 | 5 | 5 | 5 | 5 | 5 | 5 | 5 | 5 |
| **R5** | O | O | O | A3 | A3 | A3 | A2 | A2 | A2 | A2 | A2 | A2 | A2 | A2 | A2 | A2 |
| R6 | | | | | | | | | | | | | | | | |
| **R7** | | | | | | | | | | | | | | | | |

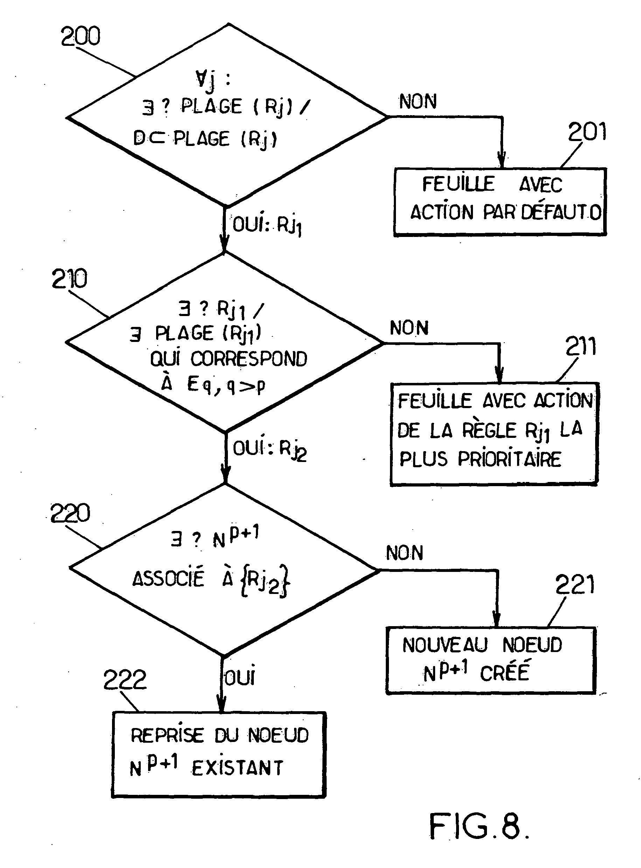

La figure 8 détaille les différentes étapes de la création d'un nouvel arc de l'arbre d'analyse selon le mode de mise en oeuvre préféré du procédé de l'invention qui évite, dès la construction de l'arbre d'analyse, la création de sous-arbres homologues. Il s'agit de déterminer le point d'arrivée d'un nouvel arc issu d'un noeud NP d'un p-ième étage de l'arbre d'analyse, et associé à un domaine D déterminé pour l'emplacement Ep associé au p-ième étage.

La méthode décrite est appliquée de façon récurrente à chaque étage de l'arbre d'analyse, pris selon l'ordre des emplacements respectivement associés aux étages. Cette méthode génère les noeuds de l'arbre d'analyse, en même temps qu'elle attribue à chaque noeud créé un sous-ensemble de règles. Ainsi, avant l'application de la présente méthode au noeud NP, un sous-ensemble {Rⱼ} de règles est déjà associé à ce noeud, j étant un nombre entier de numérotation.

On suppose que chaque règle Rj attribue une action lorsque, pour certains emplacements, la chaîne binaire lue à cet emplacement est comprise dans une plage de valeurs spécifiée par cette règle. Cette forme des règles Rj correspond à celle des exemples précédents.

Dans une première interrogation 200, on recherche celles des règles Rj dont une plage contient le domaine D pour lequel l'arc associé est en cours de création. Si aucune des règles Rj ne possède une plage contenant le domaine D, alors le point d'arrivée de l'arc est une feuille 102, 106 associée à l'action définie par défaut O, selon l'étape 201.

Dans le cas positif, la seconde interrogation 210 consiste à rechercher parmi les règles Rⱼ₁ identifiées lors de l'étape 200, les règles Rⱼ₂ dont au moins une plage correspond à un emplacement Eq postérieur à l'emplacement Ep selon l'ordre de tri des emplacements. Si aucune des règles Rⱼ₁ ne possède de plage correspondant à un emplacement postérieur à Ep, alors (étape 211) le point d'arrivée de l'arc est une feuille 102, 106 associée à l'action de la règle la plus prioritaire parmi les règles Rⱼ₁ identifiées à l'étape 200.

Dans le cas où des règles Rⱼ₂ sont identifiées lors de l'étape 210, on recherche alors, dans une étape 220, si un noeud NP⁺¹ déjà créé dans l'étage (p+1) de l'arbre d'analyse est associé au sous-ensemble {Rⱼ₂} des règles identifiées. Dans le cas affirmatif, ce noeud est le point d'arrivée du nouvel arc issu du noeud NP (étape 222). Dans le cas négatif, un nouveau noeud NP⁺¹ est créé dans l'étage (p+1) et associé au sous-ensemble {Rⱼ₂} des règles identifiées lors de l'étape 210 (étape 221)

Cette analyse est répétée pour chacun des domaines D déterminés pour l'emplacement Ep, afin d'établir l'arc issu du noeud NP associé à chacun d'eux. Elle est ensuite répétée de façon identique pour un noeud suivant du p-ième étage de l'arbre d'analyse, jusqu'à épuisement des noeuds de cet étage. Enfin, elle est encore itérée pour tous les noeuds de l'étage suivant (p+1), de façon à poursuivre la construction de l'arbre d'analyse.

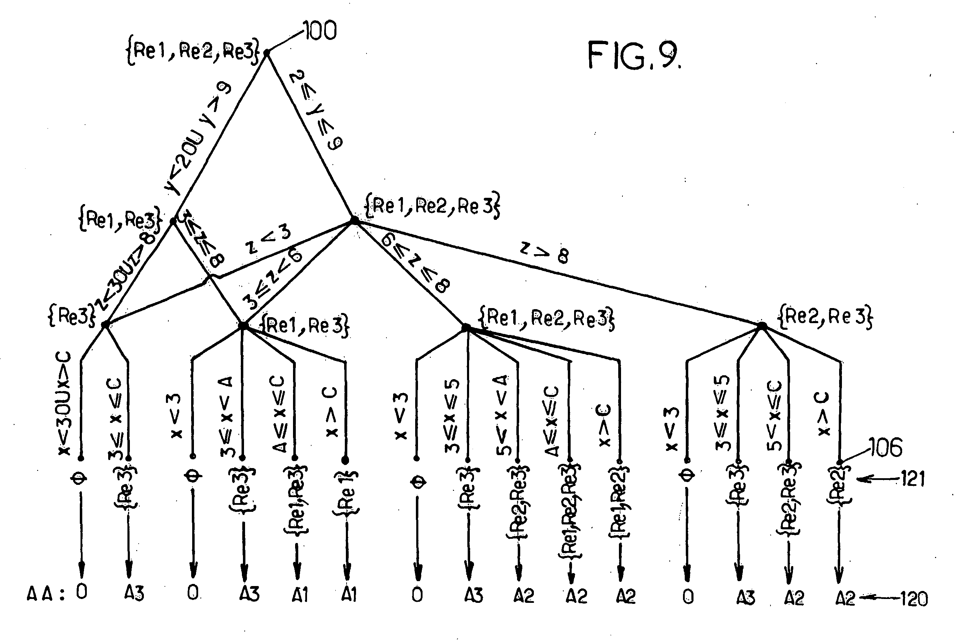

Cette méthode de création de nouveaux arcs est mise en oeuvre pour la construction d'un quatrième arbre correspondant aux règles données en référence à la figure 5. De même que pour la figure 6, les emplacements sont classés selon l'ordre objet de l'invention. L'arbre résultant est représenté sur la figure 9.

Pour chaque noeud de l'arbre est indiqué le sous-ensemble de règles {Rⱼ₂} associés à ce noeud. Pour les feuilles 106, la ligne 121 indique les règles Rⱼ₁ qui déterminent, en fonction de leurs priorités relatives, les actions associées à ces feuilles et indiquées par la ligne 120.

Les différents exemples de configuration de mémoire Trie détaillés dans cette demande de brevet montrent l'intérêt du procédé de l'invention pour la configuration d'une mémoire Trie. Ce procédé, grâce au classement des emplacements, éventuellement combiné avec le regroupement des sous-arbres d'analyse homologues, permet de réduire le nombre de registres nécessaires d'une mémoire Trie utilisée pour affecter à des cellules ATM des actions désignées par des règles fixées. Les réductions obtenues dans les exemples présentés sont en relation avec la simplicité de ces exemples. Pour des politiques de contrôle d'accès réelles, les réductions obtenues par l'application des mêmes principes peuvent être conséquentes, selon les cas, en fonction du nombre de règles, du nombre et de la taille des champs considérés, et des intervalles élémentaires associés aux champs.

Dans la pratique, la configuration de la mémoire Trie selon l'invention est effectuée au fur et à mesure de l'introduction de nouvelles règles, ou de la suppression de règles, au niveau du gestionnaire de contrôle d'accès. Ce gestionnaire comprend un module de compilation qui construit et modifie les arbres d'analyse en fonction des actualisations de règles introduites, avant de modifier la configuration existante de la mémoire Trie.

## Revendications

1. Procédé de configuration d'une mémoire associative de type Trie pour le traitement de paquets de données en fonction d'un ensemble de règles, la mémoire Trie étant utilisée pour l'analyse de chaînes binaires situées à des emplacements déterminés de chaque paquet de données, chaque règle attribuant une action (110-114) à un paquet en fonction des valeurs desdites chaînes binaires, la mémoire Trie comportant des registres composés d'un nombre déterminé de cellules élémentaires pour recevoir des références respectives, le procédé comprenant les étapes suivantes :
a- pour chacun desdits emplacements, on définit des intervalles élémentaires consécutifs couvrant des valeurs de chaîne binaire pouvant apparaître audit emplacement, chaque intervalle élémentaire étant tel que l'action (110-114) attribuée par chacune des règles ne soit pas modifiée par un changement, à l'intérieur dudit intervalle élémentaire, de la valeur de la chaîne binaire située audit emplacement dans un paquet traité ;
b- on dénombre les intervalles élémentaires définis pour chaque emplacement et on trie les emplacements dans un ordre tel que l'emplacement pour lequel le plus grand nombre d'intervalles élémentaires a été défini soit placé en dernier ;
c- on traduit l'ensemble de règles en un arbre d'analyse des paquets, comprenant des noeuds (100, 101, 103-105, 107, 108) répartis en étages successifs respectivement associés aux emplacements considérés dans ledit ordre, des arcs (130, 131), et des feuilles (102, 106) correspondant à des actions (120) attribuables par les règles, le premier étage de l'arbre comprenant un unique noeud (100) appelé racine de l'arbre d'analyse,
chaque arc ayant un noeud de départ associé à un emplacement et un point d'arrivée consistant soit en un noeud de l'étage suivant celui du noeud de départ soit en une feuille, et chaque arc étant associé à un domaine respectif de valeurs de chaîne binaire possibles audit emplacement,
l'arbre d'analyse définissant des chemins consistant chacun en une suite de n arcs (130, 131), n étant un entier au moins égal à 1, le premier arc de la suite ayant pour noeud de départ la racine de l'arbre d'analyse,
le point d'arrivée de chaque arc d'un chemin autre que le dernier arc étant le noeud de départ de l'arc suivant dudit chemin, et le point d'arrivée du dernier arc du chemin étant une feuille (102, 106) correspondant à une action attribuée d'après l'ensemble des règles à chaque paquet ayant, aux n emplacements respectivement associés aux étages des noeuds de départ des n arcs du chemin, des valeurs de chaîne binaire tombant dans les n domaines respectivement associés auxdits arcs ;
d- on alloue un groupe de registres de la mémoire Trie incluant un registre portier à chaque noeud (100, 101, 103-105, 107, 108) de l'arbre d'analyse appartenant à un étage associé à un emplacement, et on enregistre dans les cellules dudit groupe de registres des références telles qu'en analysant à partir du registre portier la valeur de chaîne binaire contenue audit emplacement dans un paquet, on obtienne une référence finale dépendant de quel domaine contient ladite valeur parmi les domaines de valeurs associés aux arcs ayant ledit noeud comme noeud de départ et telle que :
si l'arc associé (131) au domaine contenant ladite valeur a pour point d'arrivée une feuille (102, 106) correspondant à une action (120), la référence finale désigne ladite action comme étant attribuée au paquet, et
si l'arc (130) associé au domaine contenant ladite valeur a un autre noeud (101, 103-105, 107, 108) de l'étage suivant pour point d'arrivée, la référence finale désigne ledit autre noeud pour poursuivre en analysant la valeur de chaîne binaire contenue dans le paquet à l'emplacement associé audit étage suivant.

2. Procédé selon la revendication 1, suivant lequel, lors de l'étape b, on trie lesdits emplacements dans l'ordre des nombres croissants d'intervalles élémentaires.

3. Procédé selon la revendication 1 ou 2, suivant lequel les intervalles élémentaires définis pour chaque emplacement comprennent des bornes d'intervalle, et suivant lequel chaque borne d'intervalle correspond au changement d'une action (110-114) attribuable par au moins une règle.

4. Procédé selon l'une quelconque des revendications précédentes, dans lequel la traduction de l'ensemble de règles est telle qu'au moins un noeud de l'arbre d'analyse soit le point d'arrivée de plusieurs arcs issus de noeuds de départ distincts de l'étage précédent.

5. Procédé selon l'une quelconque des revendications précédentes, dans lequel un sous-arbre est associé à chaque noeud de l'arbre d'analyse autre que la racine de l'arbre d'analyse, ledit sous-arbre ayant une racine constituée par ledit noeud et étant composé des noeuds, des arcs et des feuilles rencontrés à partir dudit noeud le long des différents chemins passant par ledit noeud, et dans lequel la traduction de l'ensemble de règles est opérée de façon telle que l'arbre d'analyse n'inclue pas de premier et second sous-arbres ayant des racines distinctes et tels qu'on puisse apparier leurs noeuds respectifs, leurs arcs respectifs et leurs feuilles respectives, de telle sorte que chaque noeud du premier sous-arbre soit apparié à un noeud du second sous-arbre appartenant au même étage, que chaque feuille du premier sous-arbre soit appariée à une feuille du second sous-arbre correspondant à une même action, et que deux arcs appariés des premier et second sous-arbres aient des noeuds de départ appariés et des points d'arrivée appariés et soient associés au même domaine de valeurs.

6. Procédé selon l'une quelconque des revendications précédentes, dans lequel chaque règle de l'ensemble est définie par une action et des plages de valeurs correspondant respectivement à certains au moins des emplacements, et attribue ladite action aux paquets ayant, auxdits emplacements, des valeurs de chaînes binaires tombant respectivement dans lesdites plages.

7. Procédé selon la revendication 6, dans lequel on associe un sous-ensemble de règles à chaque noeud d'un (p+1)-ième étage de l'arbre d'analyse, p étant un entier plus grand que 0, ledit sous-ensemble étant composé des règles de l'ensemble telles que chaque plage de valeurs correspondant à un emplacement associé à l'un des p premiers étages de l'arbre ait un recouvrement non vide avec le domaine de valeurs associé à l'arc de chaque chemin passant par ledit noeud et ayant son noeud de départ dans ledit étage.

8. Procédé selon la revendication 7, dans lequel on associe au noeud racine un sous-ensemble constitué par l'ensemble des règles, et dans lequel la traduction de l'ensemble de règles comprend les étapes suivantes pour chaque noeud du p-ième étage associé à un premier sous-ensemble de règles :
- déterminer des domaines de valeurs couvrant des valeurs de chaîne binaire pouvant apparaître au p-ième emplacement selon ledit ordre, chaque domaine étant tel que l'action attribuée par chacune des règles du premier sous-ensemble ne soit pas modifiée par un changement, à l'intérieur dudit domaine, de la valeur de la chaîne binaire située au p-ième emplacement dans un paquet traité ; et
- pour chacun desdits domaines de valeurs :
- générer un arc associé audit domaine, ayant ledit noeud du p-ième étage pour noeud de départ ;
- détecter chaque règle du premier sous-ensemble qui est définie par au moins une plage de valeurs incluant ledit domaine ;
- si aucune règle n'est détectée, affecter une feuille de l'arbre correspondant à une action par défaut comme point d'arrivée dudit arc ;
- si pour chaque règle détectée, aucune plage de valeurs ne correspond à l'un quelconque des emplacements suivant le p-ième emplacement selon ledit ordre, affecter une feuille de l'arbre correspondant à une action d'une règle détectée comme point d'arrivée dudit arc ;
- si pour au moins une règle détectée, une plage de valeurs correspond à l'un des emplacements suivant le p-ième emplacement selon ledit ordre, affecter un noeud du (p+1)-ième étage de l'arbre comme point d'arrivée dudit arc, ledit noeud du (p+1)-ième étage étant associé à un second sous-ensemble composé des règles détectées du premier sous-ensemble.

9. Procédé selon la revendication 8, dans lequel des priorités sont respectivement allouées aux règles de l'ensemble, et dans lequel lorsque plusieurs règles sont détectées et aucune de leurs plages de valeurs ne correspond à l'un des emplacements suivant le p-ième emplacement, l'action correspondant à la feuille de l'arbre affectée audit arc est celle de l'une des règles détectées, sélectionnée sur la base des priorités allouées.

10. Procédé selon la revendication 8 ou 9, dans lequel on exécute les étapes suivantes lorsqu'on a détecté au moins une règle ayant une plage de valeurs correspondant à l'un des emplacements suivant le p-ième emplacement :
- rechercher s'il a déjà été généré un noeud du (p+1)-ième étage de l'arbre associé au second sous-ensemble ;
- si la recherche échoue, générer un tel noeud dans le (p+1)-ième étage ;
- si la recherche identifie un noeud du (p+1)-ième étage, affecter le noeud identifié comme point d'arrivée dudit arc.

11. Dispositif de traitement de paquets de données comprenant une mémoire associative de type Trie et un contrôleur adapté pour mettre en oeuvre un procédé de configuration de la mémoire Trie selon l'une quelconque des revendications précédentes.

12. Dispositif selon la revendication 11, dans lequel les paquets de données sont des cellules ATM porteuses de trames AAL 5.

13. Dispositif selon la revendication 11, dans lequel les paquets de données sont des paquets IP

14. Dispositif selon l'une quelconque des revendications 11 à 13, agencé pour l'acheminement par un réseau de communication de paquets de données en fonction de règles d'acheminement appliquées auxdits paquets.

15. Dispositif selon l'une quelconque des revendications 11 à 13, agencé pour le contrôle d'accès à un réseau de communication par des paquets de données en fonction de règles de contrôle d'accès à ce réseau appliquées auxdits paquets.

16. Dispositif selon l'une quelconque des revendications 11 à 13, agencé pour l'acquisition d'informations concernant des paquets de données transmis par un réseau de communication.

## Claims

1. Method of configuring a Trie-type associative memory for the processing of data packets on the basis of a set of rules, the Trie memory being used for the analysis of binary strings situated at defined locations in each data packet, each rule assigning an action (110-114) to a packet on the basis of the values of the said binary strings, the Trie memory including registers made up of a defined number of individual cells for receiving respective references, the method comprising the following stages:
a-for each of the said locations, consecutive elementary intervals are defined covering binary-string values possibly appearing at the said location, each elementary interval being such that the action (110-114) assigned by each of the rules is not altered by a change, within the said elementary interval, of the value of the binary string situated at the said location in a processed packet;
b- elementary intervals defined for each location are numbered off, and the locations are sorted in an order such that the location for which the largest number of elementary intervals has been defined is placed last;
c- the set of rules is translated into an analysis tree for the packets, comprising nodes (100, 101, 103-105, 107, 108) distributed into successive stages associated respectively with the locations considered in the said order, arcs (130, 131) and leaves (102, 106) corresponding to actions (120) which can be assigned by the rules, the first stage of the tree comprising a single node (100) called root node of the analysis tree, each arc having a start node associated with one location and an arrival point consisting either of a node of the stage following that of the start node or of a leaf, and each arc being associated with a respective domain of binary values that are possible at the said location,
the analysis tree defining paths each consisting of a series of n arcs (130, 131), n being an integer at least equal to 1, the first arc of the series having as start node the root of the analysis tree,
the arrival point of each arc of a path other than the last arc being the start node of the following arc of the said path, and the arrival point of the last arc of the path being a leaf (102, 106) corresponding to an action assigned according to the set of rules to each packet having, at the n locations associated respectively with the stages of the start nodes of the n arcs of the path, binary-string values falling into the n domains associated respectively with the said arcs; and
d- a group of registers of the Trie memory, including a gateway register, is allocated to each node (100, 101, 103-105, 107, 108) of the analysis tree belonging to a stage associated with a location, and references are recorded in the cells of the said group of registers such that, by analysing, on the basis of the gateway register, the binary-string value contained at the said location in a packet, a final reference is obtained depending on which domain contains the said value from among the domains of values associated with the arcs having the said node as start node and such that:
if the arc (131) associated with the domain containing the said value has, as arrival point, a leaf (102, 106) corresponding to an action (120), the final reference designates the said action as being assigned to the packet and
if the arc (130) associated with the domain containing the said value has another node (101, 103-105, 107, 108) of the following stage as arrival point, the final reference designates the said other node so as to carry on by analysing the binary-string value contained in the packet at the location associated with the said following stage.

2. Method according to Claim 1, according to which, during stage b, the said locations are sorted in order of increasing numbers of elementary intervals.

3. Method according to Claim 1 or 2, according to which the elementary intervals defined for each location comprise interval bounds, and according to which each interval bound corresponds to the change of an action (110-114) which can be assigned by at least one rule.

4. Method according to any one of the preceding claims, in which the translation of the set of rules is such that at least one node of the analysis tree is the arrival point of several arcs originating from separate start nodes of the preceding stage.

5. Method according to any one of the preceding claims, in which a subtree is associated with each node of the analysis tree other than the root of the analysis tree, the said subtree having a root formed by the said node and being composed of nodes, arcs and leaves, which are encountered from the said node along the various paths passing through the said node, and in which the translation of all of the rules is carried out in such a way that the analysis tree does not include first and second subtrees having different roots and such that it is possible to pair their respective nodes, their respective arcs and their respective leaves, in such a way that each node of the first subtree is matched with a node of the second subtree belonging to the same stage, in such a way that each leaf of the first subtree is matched with a leaf of the second subtree corresponding to one and the same action and in such a way that two matched arcs of the first and second subtrees have matched start nodes and matched arrival points and are associated with the same domain of values.

6. Method according to any one of the preceding claims, in which each rule of the set of rules is defined by an action and ranges of values corresponding to at least certain of the locations respectively, and assigns the said action to the packets having, at the said locations, binary-string values falling within the said ranges, respectively.

7. Method according to Claim 6, in which a subset of rules is associated with each node of a (p+1)th stage of the analysis tree, p being an integer larger than 0, the said subset being composed of the rules of the set such that each range of values corresponding to a location associated with one of the p first stages of the tree has a non-empty overlap with the domain of values that is associated with the arc of each path passing through the said node and having its start node in the said stage.

8. Method according to Claim 7, in which a subset formed by the set of rules is associated with the root node and in which the translation of the set of rules comprises the following steps for each node of the pth stage associated with a first subset of rules:
- domains of values covering binary-string values that may appear at the pth location are determined in the said order, each domain being such that the action assigned by each of the rules of the first subset is not altered by a change, within the said domain, in the value of the binary string situated at the pth location in a processed packet; and
- for each of the said domains of values:
- an arc associated with the said domain, having the said node of the pth stage as start node, is generated;
- each rule of the first subset, which is defined by at least one range of values including the said domain, is detected;
- if no rule is detected, a leaf of the tree corresponding to an action by default as arrival point of the said arc is assigned;
- if, for each rule detected, no range of values corresponds to any of the locations following the pth location in the said order, a leaf of the tree corresponding to an action of a detected rule as arrival point of the said arc is assigned; and
- if, for at least one detected rule, a range of values corresponds to one of the locations following the pth location in the said order, a node of the (p+1)th stage of the tree is assigned as arrival point of the said arc, the said node of the (p+1)th stage being associated with a second subset composed of the detected rules of the first subset.

9. Method according to Claim 8, in which the priorities are allocated to the respective rules of the set and in which, when several rules are detected and none of their ranges of values corresponds to one of the locations following the pth location, the action corresponding to the leaf of the tree assigned to the said arc is that of one of the rules detected which is selected on the basis of the allocated priorities.

10. Method according to Claim 8 or 9, in which the following steps are executed when at least one rule having a range of values corresponding to one of the locations following the pth location has been detected:
- a search is made to find if a node of the (p+1)th stage of the tree associated with the second subset has already been generated;
- if the search is in vain, such a node in the (p+1)th stage is generated; and
- if the search identifies a node of the (p+1)th stage, the identified node is assigned as arrival point of the said arc.

11. Data-packet processing device comprising a Trie-type associative memory and a controller configured to implement a method of configuring the Trie memory according to any one of the preceding claims.

12. Device according to Claim 11, in which the data packets are ATM cells carrying AAL frames 5.

13. Device according to Claim 11, in which the data packets are IP packets.

14. Device according to any one of Claims 11 to 13, configured for the routing, by a communications network, of data packets on the basis of routing rules applied to the said packets.

15. Device according to any one of Claims 11 to 13, configured for the control of access to a communications network by data packets on the basis of rules for control of access to this network which are applied to the said packets.

16. Device according to any one of Claims 11 to 13, configured for the acquisition of information relating to data packets transmitted by a communications network.

## Patentansprüche

1. Verfahren zur Konfiguration eines assoziativen Speichers vom Typ Trie zur Verarbeitung von Datenpaketen in Abhängigkeit von einem Satz von Regeln, wobei der Trie-Speicher für die Analyse von Binärketten verwendet wird, die sich an bestimmten Stellen jedes Datenpakets befinden, wobei jede Regel einem Paket in Abhängigkeit von den Werten der Binärketten eine Aktion (110-114) zuteilt, wobei der Trie-Speicher Register aufweist, die aus einer bestimmten Anzahl von Elementarzellen zusammengesetzt sind, um entsprechende Referenzen zu empfangen, wobei das Verfahren die folgenden Schritte aufweist:
a- für jede der Stellen werden aufeinander folgende Elementarintervalle definiert, die Binärkettenwerte umfassen, die an der Stelle auftreten können, wobei jedes Elementarintervall so ist, dass die von jeder der Regeln zugeteilte Aktion (110-114) innerhalb des Elementarintervalls nicht durch eine Veränderung des Werts der Binärkette, die sich an der Stelle in einem verarbeiteten Paket befindet, verändert wird;
b- die für jede Stelle definierten Elementarintervalle werden gezählt, und die Stellen werden in einer derartigen Reihenfolge sortiert, dass die Stelle, für die die größte Anzahl von Elementarintervallen definiert wurde, als letzte angeordnet wird;
c- der Satz von Regeln wird in einen Paketanalysebaum umgesetzt, der Knoten (100, 101, 103-105, 107, 108) aufweist, die in aufeinander folgenden Stufen verteilt sind, die den in der besagten Reihenfolge berücksichtigten Stellen zugeordnet sind, sowie Bögen (130, 131) und Blätter (102, 106) aufweist, die den Regeln zuteilbaren Aktionen (120) entsprechen, wobei die erste Stufe des Baums einen einzigen Knoten (100) aufweist, der Wurzel des Analysebaums genannt wird,
wobei jeder Bogen einen Anfangsknoten, der einer Stelle zugeordnet ist, und einen Ankunftspunkt hat, der entweder aus einem Knoten der auf die Stufe des Anfangsknotens folgenden Stufe oder aus einem Blatt besteht, und jeder Bogen einer Domäne von Binärkettenwerten zugeordnet ist, die an der Stelle möglich sind,
wobei der Analysebaum Wege definiert, die je aus einer Folge von n Bögen (130, 131) bestehen, wobei n eine ganze Zahl mindestens gleich 1 ist und wobei der erste Bogen der Folge als Anfangsknoten die Wurzel des Analysebaums hat,
wobei der Ankunftspunkt jedes anderen Bogens eines Wegs als der letzte Bogen der Anfangsknoten des folgenden Bogens des Wegs ist, und der Ankunftspunkt des letzten Bogens des Wegs ein Blatt (102, 106) ist, das einer Aktion entspricht, die gemäß dem Satz von Regeln jedem Paket zugeteilt ist, das an den den Stufen der Anfangspunkte der n Bögen des Wegs zugeordneten n Stellen Binärkettenwerte hat, die unter die n Domänen fallen, die den Bögen zugeordnet sind;
d- eine Gruppe von Registern des Trie-Speichers einschließlich eines "Portier"-Registers wird jedem Knoten (100, 101, 103-105, 107, 108) des Analysebaums zugewiesen, der zu einer einer Stelle zugeordneten Stufe gehört, und in den Zellen der Gruppe von Registern werden derartige Referenzen gespeichert, dass man, wenn man ausgehend vom "Portier"-Register den Binärkettenwert analysiert, der an der Stelle in einem Paket enthalten ist, eine Endreferenz erhält, die davon abhängt, welche Domäne unter den den Bögen, die den Knoten als Anfangsknoten haben, zugeordneten Wertedomänen den Wert enthält, und derart, dass:
wenn der Bogen (131), der der den Wert enthaltenden Domäne zugeordnet ist, als Ankunftspunkt ein Blatt (102, 106) hat, das einer Aktion (120) entspricht, die Endreferenz die Aktion als dem Paket zugeteilt bezeichnet; und
wenn der Bogen (130), der der den Wert enthaltenden Domäne zugeordnet ist, einen anderen Knoten (101, 103-105, 107, 108) der folgenden Stufe als Ankunftspunkt hat, die Endreferenz den anderen Knoten bezeichnet, um fortzufahren mit der Analyse des Binärkettenwerts, der in dem Paket an der Stelle enthalten ist, die der folgenden Stufe zugeordnet ist.

2. Verfahren nach Anspruch 1, bei dem im Schritt b die Stellen in der Reihenfolge der steigenden Anzahlen von Elementarintervallen sortiert werden.

3. Verfahren nach Anspruch 1 oder 2, gemäß dem die für jede Stelle definierten Elementarintervalle Intervallgrenzen aufweisen, und gemäß dem jede Intervallgrenze der Änderung einer Aktion (110-114) entspricht, die durch mindestens eine Regel zuteilbar ist.

4. Verfahren nach einem der vorhergehenden Ansprüche, bei dem die Umsetzung aller Regeln so ist, dass mindestens ein Knoten des Analysebaums der Ankunftspunkt mehrerer Bögen ist, die von unterschiedlichen Anfangsknoten der vorhergehenden Stufe stammen.

5. Verfahren nach einem der vorhergehenden Ansprüche, bei dem ein Unterbaum jedem Knoten des Analysebaums zugeordnet ist, der nicht die Wurzel des Analysebaums ist, wobei der Unterbaum eine Wurzel hat, die vom Knoten gebildet wird, und aus Knoten, Bögen und Blättern zusammengesetzt ist, die ausgehend vom Knoten entlang der verschiedenen durch den Knoten verlaufenden Wege angetroffen werden, und bei dem die Umsetzung des Satzes von Regeln so vorgenommen wird, dass der Analysebaum keine ersten und zweiten Unterbäume aufweist, die unterschiedliche Wurzeln haben und so sind, dass man ihre Knoten, ihre Bögen und ihre Blätter paaren kann, so dass jeder Knoten des ersten Unterbaums mit einem Knoten des zweiten Unterbaums gepaart ist, der zur gleichen Stufe gehört, dass jedes Blatt des ersten Unterbaums mit einem Blatt des zweiten Unterbaums gepaart ist, der einer gleichen Aktion entspricht, und dass zwei gepaarte Bögen des ersten und des zweiten Unterbaums gepaarte Anfangsknoten und gepaarte Ankunftspunkte haben und der gleichen Wertedomäne zugeordnet sind.

6. Verfahren nach einem der vorhergehenden Ansprüche, bei dem jede Regel des Satzes von einer Aktion und von Wertebereichen definiert wird, die je zumindest bestimmten der Stellen entsprechen, und die Aktion den Paketen zuteilt, die an den Stellen Binärkettenwerte haben, die in die jeweiligen Bereiche fallen.

7. Verfahren nach Anspruch 6, bei dem jedem Knoten einer (p+1)-ten Stufe des Analysebaums eine Untergruppe von Regeln zugeordnet wird, wobei p eine ganze Zahl größer als 0 ist, wobei die Untergruppe aus solchen Regeln des Satzes zusammengesetzt ist, dass jeder Wertebereich, der einer Stelle entspricht, die einer der ersten p Stufen des Baums zugeordnet ist, eine nicht leere Überlappung mit der Wertedomäne hat, die dem Bogen jedes Wegs zugeordnet ist, der durch den Knoten verläuft und dessen Anfangsknoten sich in dieser Stufe befindet.

8. Verfahren nach Anspruch 7, bei dem dem Wurzelknoten eine Untergruppe zugeordnet wird, die aus dem Satz von Regeln besteht, und bei dem die Umsetzung aller Regeln die folgenden Schritte für jeden Knoten der p-ten Stufe enthält, der einer ersten Untergruppe von Regeln zugeordnet ist:
- Bestimmung der Wertedomänen, die Binärkettenwerte abdecken, die an der p-ten Stelle gemäß der Reihenfolge auftreten können,
wobei jede Domäne so ist, dass die von jeder der Regeln der ersten Untergruppe zugeteilte Aktion nicht innerhalb der Domäne durch einer Veränderung des Werts der Binärkette, die sich an der p-ten Stelle in einem verarbeiteten Paket befindet, verändert wird; und
- für jede der Wertedomänen:
- Erzeugung eines der Domäne zugeordneten Bogens, der den Knoten der p-ten Stufe als Anfangsknoten hat;
- Erfassung jeder Regel der ersten Untergruppe, die durch mindestens einen Wertebereich definiert wird, der die Domäne enthält;
- wenn gar keine Regel erfasst wird, Zuteilung eines Blatts des Baums entsprechend einer Standardaktion als Ankunftspunkt des Bogens;
- wenn für jede erfasste Regel kein Wertebereich einer beliebigen der Stellen nach der p-ten Stelle nach der Reihenfolge entspricht, Zuteilung eines Blatts des Baums entsprechend einer Aktion einer erfassten Regel als Ankunftspunkt des Bogens;
- wenn für mindestens eine erfasste Regel ein Wertebereich einer der Stellen gemäß der p-ten Stelle in der Reihenfolge entspricht, Zuteilung eines Knotens der (p+1)-ten Stufe des Baums als Ankunftspunkt des Bogens, wobei der Knoten der (p+1)-ten Stufe einer zweiten Untergruppe zugeordnet ist, die aus den erfassten Regeln der ersten Untergruppe besteht.

9. Verfahren nach Anspruch 8, bei dem den Regeln des Satzes jeweils Prioritäten zugewiesen werden, und bei dem, wenn mehrere Regeln erfasst werden und keiner ihrer Wertebereiche einer der Stellen nach der p-ten Stelle entspricht, die Aktion, die dem Blatt des Baums entspricht, das dem Bogen zugeteilt ist, diejenige einer der erfassten Regeln ist, die auf der Basis der zugewiesenen Prioritäten ausgewählt wird.

10. Verfahren nach Anspruch 8 oder 9, bei dem die folgenden Schritte durchgeführt werden, wenn mindestens eine Regel erfasst wurde, die einen Wertebereich hat, der einer der Stellen nach der p-ten Stelle entspricht:
- Suche, ob bereits ein Knoten der (p+1)-ten Stufe des Baums erzeugt wurde, der der zweiten Untergruppe zugeordnet ist;
- wenn die Suche fehlschlägt, Erzeugung eines solchen Knotens in der (p+1)-ten Stufe;
- wenn die Suche einen Knoten der (p+1)-ten Stufe identifiziert, Zuteilung des identifizierten Knotens als Ankunftspunkt des Bogens.

11. Vorrichtung zur Verarbeitung von Datenpaketen, die einen assoziativen Speicher vom Typ Trie und einen Kontroller aufweist, der ausgelegt ist, um ein Verfahren zur Konfiguration des Trie-Speichers nach einem der vorhergehenden Ansprüche durchzuführen.

12. Vorrichtung nach Anspruch 11, bei der die Datenpakete ATM-Zellen sind, die AAL-5-Rahmen tragen.

13. Vorrichtung nach Anspruch 11, bei der die Datenpakete IP-Pakete sind.

14. Vorrichtung nach einem der Ansprüche 11 bis 13, die ausgelegt ist für den Transport von Datenpaketen über ein Kommunikationsnetz in Abhängigkeit von Transportregeln, die auf die Pakete angewendet werden.

15. Vorrichtung nach einem der Ansprüche 11 bis 13, die ausgelegt ist für die Überwachung des Zugangs von Datenpaketen zu einem Kommunikationsnetz in Abhängigkeit von Zugangskontrollregeln zu diesem Netz, die an die Pakete angewendet werden.

16. Vorrichtung nach einem der Ansprüche 11 bis 13, die ausgelegt ist für die Erfassung von Informationen betreffend Datenpakete, die von einem Kommunikationsnetz übertragen werden.
